# EUROPÄISCHE PATENTSCHRIFT

(11) **EP 4 347 365 B1**
(45) Veröffentlichungstag und Bekanntmachung des Hinweises auf die Patenterteilung: **22.01.2025**
(21) Anmeldenummer: 22731188.3
(22) Anmeldetag: 31.05.2022
(51) Int. Cl.: B62D 53/12

(54) **STECKKUPPLUNGSSYSTEM UND SATTELKUPPLUNGSANORDNUNG MIT STECKKUPPLUNGSSYSTEM**
PLUG-TYPE COUPLING SYSTEM, AND FIFTH-WHEEL COUPLING ASSEMBLY COMPRISING A PLUG-TYPE COUPLING SYSTEM
SYSTÈME DE COUPLAGE À FICHE, ET ENSEMBLE DE COUPLAGE À SELLETTE D'ATTELAGE COMPORTANT UN SYSTÈME DE COUPLAGE À FICHE

(30) Priorität: 02.06.2021 DE 102021114310
(43) Veröffentlichungstag der Anmeldung: 10.04.2024
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB (Muc)
(86) Internationale Anmeldenummer: PCT/EP2022/064716
(87) Internationale Veröffentlichungsnummer: WO 2022/253811

(56) Entgegenhaltungen:
- WO-A1-03/039940
- WO-A1-2009/112554
- WO-A1-2020/052924
- WO-A1-2020/200787
- US-A1- 2011 037 241

## Beschreibung

Die Erfindung betrifft ein Steckkupplungssystem, insbesondere für eine Sattelkupplung, und eine Sattelkupplung umfassend ein Steckkupplungssystem.

Steckkupplungen sind bereits aus dem Stand der Technik bekannt. Diese dienen dazu, Energie oder Informationen zwischen einem Zugfahrzeug und einem gezogenen Fahrzeug zu übertragen, wobei die Energie- bzw. Informationsübermittlungsverbindung automatisch nach bzw. während eines Einkuppelvorgangs etabliert wird bzw. werden kann. Problematisch bei den aus dem Stand der Technik bekannten Vorrichtungen ist jedoch, dass die Verbindung des Steckkupplungssystems leicht verloren gehen kann, insbesondere ungewollt.

Die US 2011/0037241 A1 zeigt eine Energieverbindungskonfiguration, um Versorgungsleitun-gen, wie Fluide und/oder elektrische Leitungen eines Fahrzeugs mit einem Anhänger zu verbinden. Die Vorrichtung verfügt über eine Schienenanordnung, welche auf dem Rahmen des Traktors angeordnet ist.

Es ist daher Aufgabe der vorliegenden Erfindung, eine Vorrichtung bereitzustellen, welche eine automatische energie- oder informationsleitende Verbindung zwischen einem Zugfahrzeug und einem Anhänger sicherstellen kann und einen ungewollten Verlust der Verbindung verhindert.

Diese Aufgabe wird mit einer Sattelkupplung gemäß Anspruch 1 gelöst. Weitere Merkmale, Vorteile und Ausführungsformen ergeben sich aus den abhängigen Ansprüchen, der Beschreibung sowie aus den Figuren.

Erfindungsgemäß ist ein Steckkupplungssystem, insbesondere für eine Sattelkupplung eines Nutzfahrzeugs vorgesehen. Vorteilhafterweise umfasst das Stecckupplungssystem eine Primärkopplungsvorrichtung und eine Sekundärkopplungsvorrichtung, wobei die Primärkopplungsvorrichtung eine Steckerkonsole mit Übertragungskontakten aufweist, wobei die Übertragungskontakte insbesondere in eine Steckrichtung weisen, wobei die Sekundärkopplungsvorrichtung eine Verbindungskonsole aufweist, wobei das Steckkupplungssystem eine Sperrvorrichtung aufweist, wobei das Steckkupplungssystem derart ausgebildet ist, dass die Steckerkonsole und die Verbindungskonsole in einer Kupplungsstellung miteinander verbunden sind, sodass Informationen und/oder Energie zwischen der Steckerkonsole und der Verbindungskonsole direkt oder indirekt übertragbar sind, wobei das Steckkupplungssystem derart ausgebildet ist, dass die Steckerkonsole und die Verbindungskonsole in eine Trennstellung überführbar sind, wobei in der Trennstellung keine Informationen und/oder Energie zwischen der Steckerkonsole und der Verbindungskonsole direkt oder indirekt übertragbar sind, wobei die Sperrvorrichtung derart ausgelegt ist, sodass diese in einer Sperrstellung ein Überführen von der Kupplungsstellung in die Trennstellung formschlüssig verhindert und in einer Freigabestellung ein Überführen von der Kupplungsstellung in die Trennstellung zulässt. Das erfindungsgemäße Steckkupplungssystem dient dazu, in einer Nutzfahrzeugsattelkupplungsanordnung eingesetzt zu werden. Das Stecckupplungssystem hat dabei vornehmlich die Aufgabe, Informationen und/oder Energie zwischen einem Zugfahrzeug, auf welchem eine Sattelkupplungsplatte angeordnet sein kann, und einem gezogenen Fahrzeug, auf welchem ein Königszapfen angeordnet sein kann, zu übertragen. Dieses Steckkupplungssystem ist insbesondere derart ausgebildet, dass dieses ohne einen Benutzereingriff die energie- bzw. informationsleitende Verbindung zwischen dem Zugfahrzeug und dem gezogenen Fahrzeug etablieren kann. In anderen Worten kann das Stecckupplungssystem ein automatisches Steckkupplungssystem sein. In einer beispielhaften Ausführungsvariante kann das Steckkupplungssystem antriebsfrei ausgebildet sein, sodass die Informations- und/oder Energieverbindung zwischen der Steckerkonsole und der Verbindungskonsole ausschließlich durch die Annäherungsbewegung beim Kupplungsprozess zwischen dem gezogenen und dem ziehenden Fahrzeug etabliert werden kann. Alternativ oder zusätzlich bevorzugt kann das Steckkupplungssystem auch derart ausgebildet sein, dass erst nach einem Einkuppelvorgang, beispielsweise durch einen Antrieb, die Energie- bzw. die Informationsverbindung hergestellt wird. Das Steckkupplungssystem, insbesondere die Primärkopplungsvorrichtung und/oder die Sekundärkopplungsvorrichtung, kann einen Antrieb, insbesondere einen Verbindungsantrieb, aufweisen. Das Steckkupplungssystem umfasst insbesondere eine Primärkopplungsvorrichtung sowie eine Sekundärkopplungsvorrichtung. Die Primärkopplungsvorrichtung ist dazu ausgelegt und bestimmt, an dem ziehenden oder dem gezogenen Fahrzeug angeordnet zu sein. Die Sekundärkopplungsvorrichtung hingegen ist dazu bestimmt und dazu ausgelegt, an dem entgegengesetzten Nutzfahrzeugkupplungspartner angeordnet zu sein, daher an dem gezogenen bzw. dem ziehenden Fahrzeug. In anderen Worten ist daher die Primärkopplungsvorrichtung an dem einem Fahrzeug und die Sekundärkopplungsvorrichtung an dem anderen Fahrzeug angeordnet. Die Primärkopplungsvorrichtung verfügt über eine Steckerkonsole, welche Übertragungskontakte aufweist. Diese Steckerkonsole ist dazu ausgebildet und dazu bestimmt, mit der Verbindungskonsole der Sekundärkopplungsvorrichtung derart in Eingriff bringbar zu sein, sodass Informationen und/oder Energie zwischen der Steckerkonsole und der Verbindungskonsole übertragen werden können, wenn sich das Steckkupplungssystem in der Kuppelstellung befindet. Hierzu weist die Steckerkonsole insbesondere Übertragungskontakte auf, welche beispielsweise elektrische Leitkontakte, Hydraulikleitungsanschlüsse und/oder Pneumatikleitungsanschlüsse sein können. Diese Übertragungskontakte der Steckerkonsole weisen insbesondere in Steckrichtung. Diese Steckrichtung ist dabei insbesondere diejenige Richtung, in welche die Primärkopplungsvorrichtung in Relation zur Sekundärkopplungsvorrichtung verlagert werden muss, um einen energieleitenden und/oder informationsleitenden Kontakt zwischen der Steckerkonsole und der Verbindungskonsole zu etablieren. Erfindungsgemäß ist es, wenn die Steckrichtung parallel zu einer Einfahrrichtung einer Sattelkupplungsplatte angeordnet bzw. orientiert ist. Insbesondere in der Kuppelstellung ist die Steckrichtung parallel zu derjenigen Richtung, in welche ein Königszapfen in Relation zu einer Sattelkupplungsplatte verlagert werden muss, um in der Sattelkupplungsplatte sicher verankert zu werden bzw. eingekuppelt werden zu können. Die Steckrichtung kann alternativ oder zusätzlich bevorzugt parallel zur Gradeausfahrrichtung des Nutzfahrzeuges orientiert sein, an welchem das Steckkupplungssystem angeordnet ist. In der Kupplungsstellung des Steckkupplungssystems ist eine Übertragung von Informationen und/oder Energie zwischen der Steckerkonsole und der Verbindungskonsole direkt und/oder indirekt möglich. Sollte sich das Steckkupplungssystem jedoch in einer Trennstellung befinden, so ist insbesondere keine Informationsund/oder Energieübertagung zwischen der Steckerkonsole und der Verbindungskonsole möglich. Vorteilhafterweise ist dabei eine Überführung von der Kupplungsstellung in die Trennstellung durch eine Verlagerung in Steckrichtung zwischen der Steckerkonsole und der Verbindungskonsole von Nöten, insbesondere durch den Antrieb. In anderen Worten kann dies bedeuten, dass eine Überführung von der Kupplungsstellung in die Trennstellung eine Relativbewegung der Steckerkonsole zur Verbindungskonsole in Steckrichtung erfordern. Um ein ungewolltes Austreten des Steckkupplungssystem aus der Kupplungsstellung, insbesondere in die Trennstellung, zu verhindern, verfügt das Steckkupplungssystem über eine Sperrvorrichtung. Diese Sperrvorrichtung ist dabei derart ausgelegt, sodass diese in eine Sperrstellung und in eine Freigabestellung bringbar ist. In anderen Worten hat die Sperrvorrichtung insbesondere zwei Zustände, nämlich eine Sperrstellung und eine Freigabestellung. In der Sperrstellung ist dabei ein Austreten aus der Kupplungsstellung in die Trennstellung, insbesondere formschlüssig, durch die Sperrvorrichtung verhindert. In der Freigabestellung verhindert die Sperrvorrichtung eine Überführung von der Kupplungsstellung in die Trennstellung jedoch nicht. Die Sperrvorrichtung kann dabei beispielsweise ein Haken-Ösen-System sein. Alternativ oder zusätzlich bevorzugt kann die Sperrvorrichtung auch ein Sperrstiftsystem sein/aufweisen und/oder einen Sperrstift umfassen, welches bzw. welcher formschlüssig in der Sperrstellung eine Überführung von der Kupplungsstellung in die Trennstellung verhindert. Durch die Verwendung einer formschlüssigen Verhinderung kann in besonders einfacher und effektiver Weise sichergestellte werden, dass die Sperrvorrichtung ein ungewolltes Austreten aus der Kupplungsstellung in die Trennstellung sicher verhindern kann.

Zweckmäßigerweise weist die Sperrvorrichtung einen Aktuator auf, wobei der Aktuator die Sperrvorrichtung in die Sperrstellung oder in die Freigabestellung überführen kann. Der Aktuator ist daher ein Mittel, welches aktiv den Zustand der Sperrvorrichtung beeinflussen kann. Durch die Verwendung eines Aktuators kann in gezielter Weise auf die Stellung bzw. den Zustand der Sperrvorrichtung Einfluss genommen werden. Zweckmäßigerweise weist der Aktuator einen Energieanschluss auf, durch welchen insbesondere gezielt eine Betätigung des Aktuators erfolgen kann. Der Aktuator ist insbesondere bidirektional ausgelegt. Unter einem bidirektional ist dabei zu verstehen, dass der Aktuator die Sperrvorrichtung in die Sperrstellung und in die Freigabestellung und umgekehrt überführen kann.

In einer besonders bevorzugten Ausführungsvariante verfügt die Sperrvorrichtung über ein Vorspannmittel, wobei das Vorspannmittel die Sperrvorrichtung in die Sperrstellung oder die Freigabestellung forciert. Beispielsweise versucht eine Feder oder ein anderes Kraftspeichermittel die Sperrvorrichtung, insbesondere konstant, in die Sperrstellung oder die Freigabestellung zu führen bzw. zu halten. Hierdurch kann erreicht werden, dass auch bei einem Energieausfall die Sperrvorrichtung einen definierten Zustand einnimmt, sodass hierdurch die Sicherheit des Systems weiter gesteigert werden kann.

In einer vorteilhaften Ausführungsform ist der Aktuator ein Druckluftzylinder, ein magnetischer Antrieb, ein Linearmotor oder ein Hydraulikzylinder. Durch die Ausbildung des Aktuators als ein Druckluftzylinder kann in besonders einfacher Weise das in einem Nutzfahrzeug vorhandene Druckluftsystem zur Betätigung des Aktuators verwendet werden, sodass hierdurch ein besonders einfach betätigbarer und montierbarer Aktuator erreicht werden kann. Bei der Ausbildung des Aktuators als magnetischer und/oder elektrischer Antrieb kann in besonders einfacher Weise das Bordstromnetz des Nutzfahrzeugs verwendet werden. Sollte der Aktuator als ein Linearmotor ausgebildet sein, so resultiert ein besonders kompakter Aktuator, sodass wertvoller Bauraum gespart werden kann. Sollte der Aktuator als ein Hydraulikzylinder ausgebildet sein, so kann hierdurch erreicht werden, dass ein besonders leichter aber gleichzeitig kompakter Aktuator realisiert werden kann, sodass hierdurch ebenfalls wertvoller Bauraum gespart werden kann.

Zweckmäßigerweise weist die Sperrvorrichtung ein Sperrmittel, welches insbesondere ein Sperrstift ist, und/oder eine Sperrstruktur auf, wobei das Sperrmittel und die Sperrstruktur insbesondere komplementär zueinander ausgebildet sind. Unter "komplementär zueinander ausgebildet" ist insbesondere zu verstehen, dass das Sperrmittel in die Sperrstruktur einführbar ist, vorteilhafterweise ohne dass zwischen dem Sperrmittel und der Sperrstruktur eine Presspassung ausgebildet wird. Alternativ oder zusätzlich bevorzugt kann unter komplementär auch verstanden werden, dass das Sperrmittel und die Sperrstruktur gleich oder ähnlich ausgebildete Grundstrukturquerschnitte, beispielsweise kreisförmige oder elliptische Querschnitte, aufweisen und ineinander führbar sind. Das Sperrmittel ist insbesondere als ein männlicher Kontaktpartner der Sperrvorrichtung ausgebildet und ist vorteilhafterweise durch den Aktuator verlagerbar. Die Sperrstruktur hingegen ist vorteilhafterweise als Gegenpart zum Sperrmittel ausgebildet, insbesondere als eine weibliche Struktur, und wirkt mit dem Sperrmittel in der Sperrstellung derart formschlüssig zusammen, sodass eine Überführung von der Kupplungsstellung in die Trennstellung formschlüssig verhindert ist. Die Sperrstruktur kann jedoch beispielsweise auch als eine Kugel oder ein Anschlagselement ausgebildet sein, hinter welches das Sperrmittel formschlüssig greifen kann. Das Sperrmittel und/oder die Sperrstruktur kann z.B. ein mechanisches Zwischenelement sein oder umfassen, insbesondere ein Sicherungsring, eine Kolbenstangenerweiterung oder ein Kranz, vorteilhafterweise mit Wiederhaken.

Zweckmäßigerweise kann die Sperrvorrichtung derart ausgebildet sein, dass die Sperrwirkung der Sperrvorrichtung nicht direkt durch den Aktuator erreicht wird.

Dies ist z.B. besonders vorteilhaft, denn hierdurch kann selbst bei einem Ausfall des Aktuators die Sperrstellung beibehalten werden. In anderen Worten kann der Aktuator nur indirekt die Sperrvorrichtung in die Sperrstellung und/oder in die Trennstellung verbringen. Diese Art der Sperrvorrichtung kann als eine indirekt wirkende Sperrvorrichtung im Sinne der Erfindung bezeichnet werden. Beispielsweise kann dies durch einen durch den Aktuator verlagerbaren Ring erfolgen, welcher eine elastische Sperrstruktur in der Sperrstellung umgibt, um so die elastische Verformung der Sperrstruktur zu verhindern bzw. derart zu beschränken, sodass ein in der Sperrstruktur aufgenommenes Element die Sperrstruktur nicht verlassen kann. In der Trennstellung ist jedoch der Ring derart verlagert, dass dieser eine elastische Verformung der Sperrstruktur zulässt, sodass das aufgenommene Element aus oder in die Sperrstruktur führbar ist.

Zweckmäßigerweise ist das Sperrmittel derart gelagert und/oder gehalten, dass dieses durch eine translatorische Bewegung von der Sperrstellung in die Freigabestellung, insbesondere entlang einer Verlagerungsrichtung, verlagerbar ist, insbesondere durch den Aktuator. Das Sperrmittel ist daher insbesondere derart gelagert bzw. gehalten, insbesondere an oder durch den Aktuator bzw. den Grundkörper des Aktuators, sodass durch eine, insbesondere ausschließliche, translatorische Bewegung des Sperrmittels die Sperrvorrichtung von der Sperrstellung in die Freigabestellung und/oder umgekehrt überführt wird oder überführbar ist. Diese translatorische Bewegung des Sperrmittels erfolgt dabei entlang einer Verlagerungsrichtung des Sperrmittels. Durch die ausschließlich translatorische Bewegung des Sperrmittels kann eine besonders kompakte und einfach zu konstruierende Sperrvorrichtung erreicht werden, sodass die Sperrvorrichtung besonders kostengünstig und bauraumsparend ist.

In einer vorteilhaften Ausführungsform steht die Verlagerungsrichtung quer, insbesondere senkrecht, auf der Steckrichtung. Unter einem quer ist dabei zu verstehen, dass der kleinere Winkel zwischen der Verlagerungsrichtung und der Steckrichtung zumindest 30°, bevorzugt zumindest 60° und besonders bevorzugt zumindest 75° beträgt und/oder 90° nicht überschreitet. Durch die Ausbildung der Verlagerungsrichtung und der Steckrichtung quer zueinander kann eine in Steckrichtung besonders kompakte Anordnung erreicht werden. Sollte der Winkel zwischen der Verlagerungsrichtung und der Steckrichtung zumindest 30° betragen, so kann hierdurch eine besonders einfach herzustellende Sperrvorrichtung erreicht werden. Sollte der Winkel zumindest 60° betragen, so kann eine besonders kompakte Sperrvorrichtung sowohl in Verlagerungsrichtung als auch in Steckrichtung erreicht werden. Sollte der Winkel zwischen der Verlagerungsrichtung und der Steckrichtung zumindest 75° betragen, so kann hier durch eine besonders sichere formschlüssige Sperrvorrichtung erreicht werden. Besonders bevorzugt ist es jedoch, wenn die Verlagerungsrichtung und die Steckrichtung senkrecht zueinanderstehend sind, denn hierdurch kann eine besonders kompakte und gleichzeitige sehr sichere und einfach herzustellende und zu montierende Sperrvorrichtung erreicht werden.

Vorteilhafterweise ist die Sperrstruktur eine Nut oder eine Ausnehmung zur Aufnahme des Sperrmittels oder kann die Sperrstruktur als ein Vorsprung ausgebildet sein. Durch die Ausbildung der Sperrstruktur als eine Nut oder als eine Ausnehmung kann eine besonders bauraumsparende Sperrvorrichtung erreicht werden, welche darüber hinaus auch besonders einfach herstellbar ist. Unter einer Ausnehmung ist dabei eine weibliche Ausgestaltung zu verstehen, welche beispielsweise als eine Bohrung, durch ein Prägen oder durch ein Fräsverfahren herstellbar ist. Sollte die Sperrstruktur als ein Vorsprung ausgebildet sein, so kann hierdurch eine besonders mechanisch belastbare Vorrichtung erreicht werden, sodass durch die Ausbildung des Sperrmittels als ein Vorsprung eine mechanische Schwächung des Elements, welches die Sperrstruktur aufweist, vermieden werden kann oder zumindest reduziert werden kann.

Vorteilhafterweise weist bzw. weisen die Primärkopplungsvorrichtung und die Sekundärkopplungsvorrichtung Führungsstrukturen auf oder eine Führungsstruktur, insbesondere in Form eines Führungsdorns oder einer Führungsmuffe. Die Führungsstrukturen oder die Führungsstruktur dienen bzw. dient dabei dazu, die Primärkopplungsvorrichtung in Relation zur Sekundärkopplungsvorrichtung zu führen. In anderen Worten können die Führungsstrukturen der Primärkopplungsvorrichtung und/oder der Sekundärkopplungsvorrichtung sicherstellen, dass die Primärkopplungsvorrichtung und die Sekundärkopplungsvorrichtung sicher von der Trennstellung in die Kupplungsstellung geführt werden können. Insbesondere sind die Führungsstrukturen dabei derart ausgebildet, dass diese eine ungewollte Verlagerung, insbesondere senkrecht zur Steckrichtung, verhindern können, insbesondere formschlüssig. Die Führungsstrukturen können beispielsweise als Führungsdorne oder als komplementär ausgebildete Führungsaufnahmestrukturen, insbesondere als Führungsmuffe, ausgebildet sein. Diese Führungsaufnahmestrukturen sind insbesondere weibliche Ausgestaltungen von Führungselementen, welche beispielsweise dazu dienen können und/oder derart ausgebildet sind, Führungsdorne sicher aufnehmen zu können. Zweckmäßigerweise erstrecken sich die Führungselemente in Steckrichtung. Durch die Verwendung von Führungsstrukturen kann eine besonders sichere Überführung in die Kupplungsstellung des Steckkupplungssystems erreicht werden.

In einer besonders bevorzugten Ausführungsform ist zumindest eine Sperrstruktur und/oder eine Vielzahl von Sperrstrukturen an und/oder in der Führungsstruktur angeordnet oder ausgebildet. Durch die Verwendung der Führungsstruktur und/oder einiger Führungsstrukturen dahingehend, dass diese einen Teil der Sperrvorrichtung ausbilden, kann eine besonders einfache und bauteilarme Ausgestaltung eines Steckkupplungssystems mit einer Sperrvorrichtung erreicht werden. Darüber hinaus kann hierdurch auch noch eine besonders einfache Wartbarkeit und/oder Austauschbarkeit der Sperrvorrichtung erreicht werden, denn hierdurch wird die Zugänglichkeit der Sperrstruktur erhöht bzw. vereinfacht.

Vorteilhafterweise weist die Primärkopplungsvorrichtung und/oder die Sekundärkopplungsvorrichtung eine Aufnahmestruktur, insbesondere zur Aufnahme oder Führung der Führungsstruktur, auf, wobei die Aufnahmestruktur in der Freigabestellung durch elastische Verformung eine Einführung eines Gegenparts, insbesondere einer Führungsstruktur, erlaubt, wobei die Aufnahmestruktur in der Sperrstellung ein Ausführen des Gegenparts, insbesondere formschlüssig, verhindert. Die Aufnahmestruktur kann beispielsweise eine Führungsmuffe sein. Die Aufnahmestruktur kann, insbesondere nach innen, ragende Wiederhaken oder Strukturen aufweisen, welche in der Sperrstellung einen sperrenden Kontakt mit dem Gegenpart ausbilden. Der Gegenpart ist insbesondere Teil der Sekundärkopplungsvorrichtung, wenn die Aufnahmestruktur ein Teil der Primärkopplungsvorrichtung ist oder umgekehrt. Der Gegenpart kann insbesondere ein Führungsdorn sein, wie er bereits vorhergehend und nachfolgend beschrieben wurde.

Vorteilhafter Weise weist die oder eine Aufnahmestruktur Schlitze, insbesondere in Steckrichtung, auf. Hierdurch kann die elastische Verformbarkeit der Aufnahmestruktur gesteigert werden, insbesondere um möglichst große Gegenparts aufnehmen zu können. Des Weiteren kann hierdurch auch der Energieaufwand bei der Verkupplung reduziert werden, sodass eine energetisch günstige Vorrichtung resultiert.

In einer bevorzugten Ausführungsform ist die Aufnahmestruktur in der Sperrstellung durch einen umgebenden und/oder verschieblichen Ring daran gehindert, durch eine elastische Verformung, insbesondere der Aufnahmestruktur, eine Einoder Ausführung eines Gegenparts zu erlauben. Beispielsweise kann der Ring daher die Aufnahmestruktur derart umgeben, sodass der Ring formschlüssig eine Verformung der Aufnahmestruktur ver- oder behindert. Der Ring ist z.B. durch einen oder den Aktuator verschieblich. Hierdurch kann daher eine indirekt wirkende Sperrvorrichtung erreicht werden. Der Ring ist zweckmäßigerweise, insbesondere um eine geringe Baugröße zu erreichen, in Steckrichtung oder parallel zur Steckrichtung verschieblich, vorteilhafterweise durch den oder einen Aktuator.

Zweckmäßigerweise ist eine Sekundärsperrvorrichtung vorhanden, wobei die Sekundärsperrvorrichtung derart ausgelegt bzw. ausgebildet ist, sodass diese in dessen Sperrstellung eine Überführung von der Kupplungsstellung in die Trennstellung, insbesondere form- oder kraftschlüssig, verhindert und in dessen Freigabestellung eine Überführung von der Kupplungsstellung in die Trennstellung zulässt. In anderen Worten kann eine zweite Sperrvorrichtung vorhanden sein, welche insbesondere unabhängig von der (ersten) Sperrvorrichtung eine Versperrung erreichen kann. Hierdurch kann die Sicherheit des Systems weiter gesteigert werden. Die Sekundärsperrvorrichtung kann dabei sämtliche Merkmale, Vorteile, Ausgestaltungen oder Ausführungsformen haben, wie die vorhergehend oder nachfolgend beschriebenen Sperrvorrichtungen.

Bevorzugt basieren die Sperrvorrichtung und die Sekundärsperrvorrichtung auf unterschiedlichen Sperrmechanismen. In anderen Worten kann dabei die Energiequelle, insbesondere der Aktuatoren, der Sperrvorrichtung und der Sekundärsperrvorrichtung unterschiedlich sein. Z.B. kann der eine Aktuator ein pneumatischer und der andere Aktuator ein hydraulischer Aktuator sein. Auch kann die Sperrvorrichtung eine direkte Sperrwirkung haben und die Sekundärsperrvorrichtung eine indirekte Sperrwirkung oder umgekehrt. Eine direkte Sperrwirkung liegt insbesondere vor, wenn der Aktuator ein Sperrmittel oder eine Sperrstruktur verschiebt, welche dann insbesondere selbst formschlüssig sperrt. Eine indirekte Sperrwirkung liegt hingegen insbesondere vor, wenn das Sperrmittel nur mittelbar das Sperrmittel oder die Sperrstruktur in die Sperrstellung bringt, daher nicht unmittelbar selbst sperrt. Alternativ oder zusätzlich bevorzug kann unter "unterschiedlichen Sperrmechanismen" auch verstanden werden, dass die Sperrwirkungsentfaltung unterschiedlich ist. Beispielsweise kann die Sperrvorrichtung formschlüssig arbeiten und die Sekundärsperrvorrichtung nicht formschlüssig, insbesondere kraftschlüssig und/oder durch eine Dauerkraft, vorteilhafterweise in Steckrichtung. Diese Dauerkraft kann z.B. durch einen dauerhaft beaufschlagten Druckluftzylinder erreicht werden, wenn dieser in der Sperrstellung befindlich ist.

Zweckmäßigerweise weist die Primärkopplungsvorrichtung und/oder die Sekundärkopplungsvorrichtung einen Antrieb auf oder eine Vielzahl von Antrieben, wobei der Antrieb oder die Antriebe derart ausgebildet ist, die Primärkopplungsvorrichtung und/oder die Sekundärkopplungsvorrichtung, insbesondere durch eine translatorische Bewegung in Steckrichtung, von der Kupplungsstellung in die Trennstellung und/oder von der Trennstellung in die Kupplungsstellung zu überführen. Beispielsweis kann das Steckkupplungssystem daher derart ausgebildet sein, dass eine Überführung von der Kupplungsstellung in die Trennstellung oder von der Trennstellung in die Kupplungsstellung nicht durch die Annäherung der zu kuppelnden Fahrzeuge erfolgt sondern durch einen separaten Antrieb. Dies hat insbesondere den Vorteil, dass die mechanischen Belastungen auf die Primärkopplungsvorrichtung und die Sekundärkopplungsvorrichtung während eines Einkuppelvorgangs - zwischen dem Zugfahrzeug und dem gezogenen Fahrzeug - reduziert werden können, sodass eine besonders gewichtssparende Primärkopplungsvorrichtung bzw. Sekundärkopplungsvorrichtung erreicht werden kann. Somit kann durch einen Antrieb in dem Steckkupplungssystem das zur Verfügung stehende Nutzgewicht des Nutzfahrzeugs in effektiver Weise gesteigert werden.

Beispielsweise kann der Antrieb oder einer der Antriebe ein Linearmotor, ein Hydraulikmotor, ein Hydraulikkolben und/oder ein Pneumatikkolben sein.

In einer vorteilhaften Ausführungsform ist die Sperrstruktur an oder in dem Antrieb, insbesondere in oder an einer Kolbenstange des Antriebs, angeordnet oder ausgebildet. Hierdurch kann eine besonders kompakte und bauraumsparende Sperrvorrichtung erreicht werden, welche auch besonders effektiv eine ungewollte Trennung bzw. Überführung von der Kupplungsstellung in die Trennstellung verhindern kann. Beispielsweise kann daher die Sperrstruktur als eine Nut oder eine Ausnehmung in oder an der Kolbenstange eines Antriebs, welcher beispielsweise ein Doppelwirkender Zylinder sein kann, ausgebildet sein. Hierdurch können die mechanisch belasteten Bauteile bei einem ungewollten Versuch der Überführung von der Kupplungsstellung in die Trennstellung reduziert werden, sodass hierdurch Material und Gewicht eingespart werden kann.

Ein weiterer Aspekt der Erfindung betrifft eine Sattelkupplung umfassend ein Steckkupplungssystem wie vorgehend oder nachfolgend beschrieben. Eine Sattelkupplung umfasst dabei insbesondere eine Sattelkupplungsplatte und einen Königszapfen, wobei die Primärkopplungsvorrichtung beispielsweise an der Sattelkupplungsplatte und/oder wobei die Sekundärkopplungsvorrichtung insbesondere in unmittelbarer Nähe zum Königszapfen angeordnet sein kann. Unter einem in unmittelbarer Nähe angeordnet Sein kann dabei verstanden werden, dass die beiden Bauteile maximal 2 m, bevorzugt 1 m, voneinander beabstandet sind, wenn sich das System in einem montierten Zustand, insbesondere in der Kupplungsstellung, befindet.

Ein weiterer Aspekt der Erfindung kann eine Nutzfahrzeuganordnung umfassend eine Sattelkupplung und/oder ein Stückkupplungssystem wie vorgehend oder nachfolgend beschrieben, betreffen. Eine Nutzfahrzeuganordnung umfasst insbesondere ein ziehendes und ein gezogenes Fahrzeug. Die Nutzfahrzeuganordnung kann daher beispielsweise durch ein Zugfahrzeug und einen Sattelauflieger gebildet sein.

Weitere Vorteile und Merkmale der vorliegenden Erfindung ergeben sich aus der nachfolgenden Beschreibung in Bezug auf die Figuren. Einzelne Merkmale der dargestellten Ausführungsform können dabei auch an anderen Ausführungsformen eingesetzt werden, sofern dies nicht ausdrücklich ausgeschlossen wurde. Es zeigen:
Figur 1 einen Schnitt durch ein Steckkupplungssystem;
Figur 2 eine Detailansicht des in Figur 1 gezeigten Steckkupplungssystems;
Figur 3 eine Außenansicht eines Steckkupplungssystems;
Figur 4 eine Seitenansicht eines Steckkupplungssystems;
Figur 5 eine Detailansicht des in Figur 4 dargestellten Steckkupplungssystems;
Figur 6 eine Sattelkupplung umfassend ein Steckkupplungssystem; und
Figur 7 eine indirekt wirkende Sperrvorrichtung.

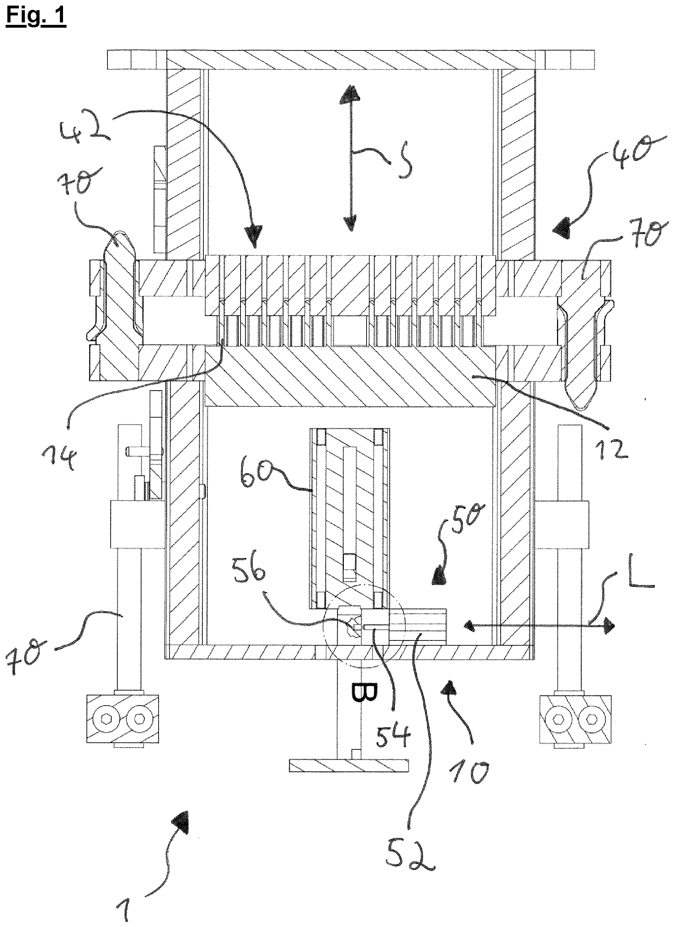

In **Figur 1** ist ein Schnitt durch ein Steckkupplungssystem 1 gezeigt. Die Schnittebene wird dabei durch die Verlagerungsrichtung L und die Steckrichtung S aufgespannt. Das Steckkupplungssystem 1 verfügt über eine Primärkopplungsvorrichtung 10 sowie über eine Sekundärkopplungsvorrichtung 40. Die Primärkopplungsvorrichtung 10 und die Sekundärkopplungsvorrichtung 40 sind in Steckrichtung S verlagerbar zueinander, wobei in der Figur 1 das Steckkupplungssystem 1 in der Kupplungsstellung befindlich ist. Die Trennstellung des Steckkupplungssystems 1 ist dabei in Steckrichtung S beabstandet von der in der Figur 1 dargestellten Kupplungsstellung. Die Primärkopplungsvorrichtung 10 verfügt über eine Steckerkonsole 12, welche Übertragungskontakte 14 aufweist, welche sich in Steckrichtung S erstrecken. Seitlich in Verlagerungsrichtung L beabstandet zu den Übertragungskontakten 14 befinden sich Führungsstrukturen 70, welche sowohl als Führungsdorn als auch als Führungsmuffen ausgebildet sein können, wie es in der Figur 1 exemplarisch dargestellt ist. Sowohl die Primärkopplungsvorrichtung 10 als auch die Sekundärkopplungsvorrichtung 40 verfügen dabei jeweils über eine Führungsstruktur 70, welche als Führungsdorn ausgebildet ist als auch über eine Führungsstruktur 70, welche als Führungsdorn aufnehmende Führungsmuffe ausgebildet ist. Die Primärkopplungsvorrichtung 10 verfügt über einen Antrieb 60, welcher als doppelwirkender Zylinder ausgebildet ist, und die Primärkopplungsvorrichtung 10 in Steckrichtung S relativ zur Sekundärkopplungsvorrichtung 40 verlagern kann, um so das Steckkupplungssystem 1 in die Kupplungsstellung oder in die Trennstellung zu überführen. Um eine seitliche Verlagerung der Primärkopplungsvorrichtung 10 zu verhindern, verfügt die Primärkopplungsvorrichtung 10 seitlich über Führungsstrukturen 70 in Form von Linearführungen. Um ein ungewolltes Überführen von der Kupplungsstellung in die Trennstellung formschlüssig zu verhindern, weist das Steckkupplungssystem 1 eine Sperrvorrichtung 50 auf. Diese Sperrvorrichtung 50 verfügt über einen Aktuator 52, ein Sperrmittel 54 und eine Sperrstruktur 56. Der Aktuator 52 ist dabei in der Lage, das Sperrmittel 54, welches in der dargestellten Variante ein Sperrstift ist, in Verlagerungsrichtung L zu verlagern, um die Sperrvorrichtung 50 von der dargestellten Freigabestellung in die Sperrstellung zu überführen. Das Sperrmittel 54 vollführt hierzu eine rein translatorische Bewegung in Verlagerungsrichtung L. Die Sperrstruktur 56 ist als eine komplementär zu dem Sperrmittel 54 ausgebildete Sperrstruktur 56 ausgebildet, in dem dargestellten Ausführungsbeispiel als eine Bohrung.

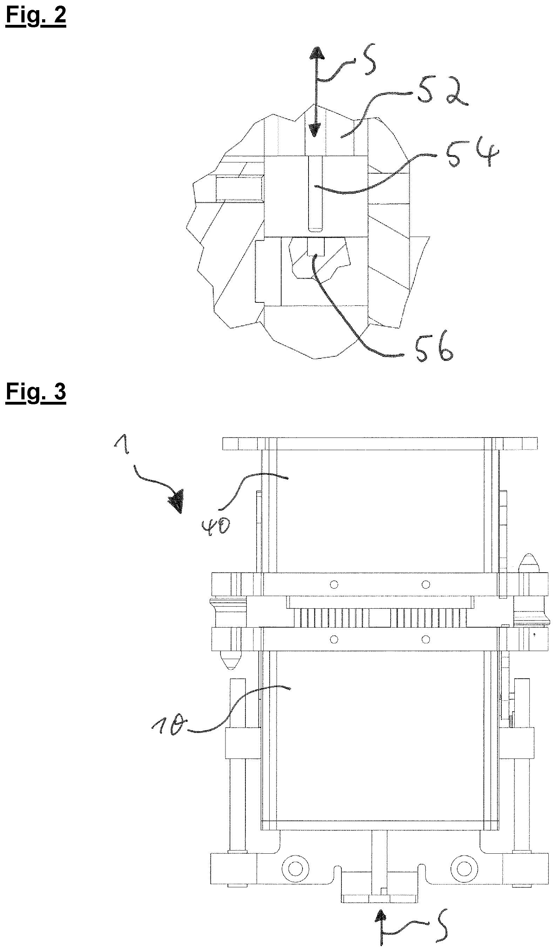

In **Figur 2** ist der in der Figur 1 mit B gekennzeichnete Bereich als Detailansicht dargestellt, wobei der Figur 2 die Ausbildung des Sperrmittels 54 als Sperrstift und die Ausbildung der Sperrstruktur 56 als Bohrung entnommen werden kann.

In **Figur 3** ist eine Draufsicht auf ein Steckkupplungssystem 1 gezeigt, welches insbesondere zu dem in der Figur 1 dargestellten Steckkupplungssystem 1 passen kann. In der Figur 3 ist das Steckkupplungssystem 1 ebenfalls in der Kupplungsstellung befindlich dargestellt.

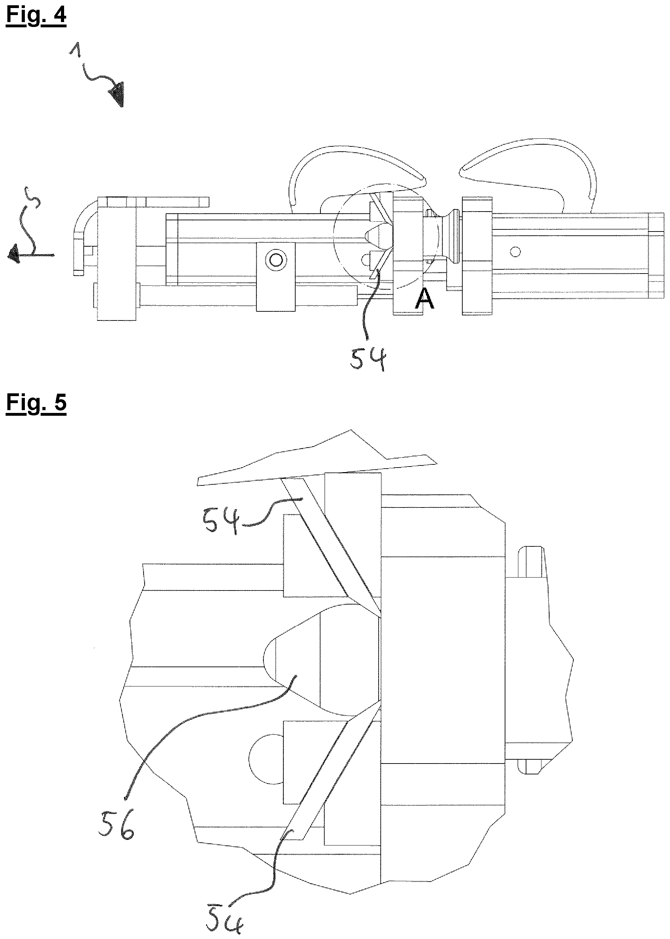

In **Figur 4** ist eine Seitenansicht eines Steckkupplungssystems 1 gezeigt. In dem dargestellten Ausführungsbeispiel sind die Sperrmittel 54 als Schieber ausgebildet, welche mit einem distalen Ende eines Führungsdorns hinterschneidend in Eingriff bringbar sind, um so eine Verlagerung der Primärkopplungsvorrichtung 10 in Relation zur Sekundärkopplungsvorrichtung 40 in Steckrichtung S formschlüssig zu verhindern.

In **Figur 5** ist der in Figur 4 mit A bezeichnete Bereich in einer Detailansicht dargestellt. Wie der Figur 5 entnommen werden kann, sind die Sperrmittel 54 als translatorisch bewegliche Sperrmittel 54 ausgebildet, welche in formschlüssiger Weise mit einer Sperrstruktur 56 in Eingriff bringbar sind. Die Sperrstruktur 56 bildet dabei ein distales Ende in Steckrichtung S einer Führungsstruktur 70 aus. Mit anderen Worten ist in der in Figur 5 dargestellten Ausführungsvariante die Sperrstruktur 56 als ein hervorspringendes Element ausgebildet und somit als ein männliches Element.

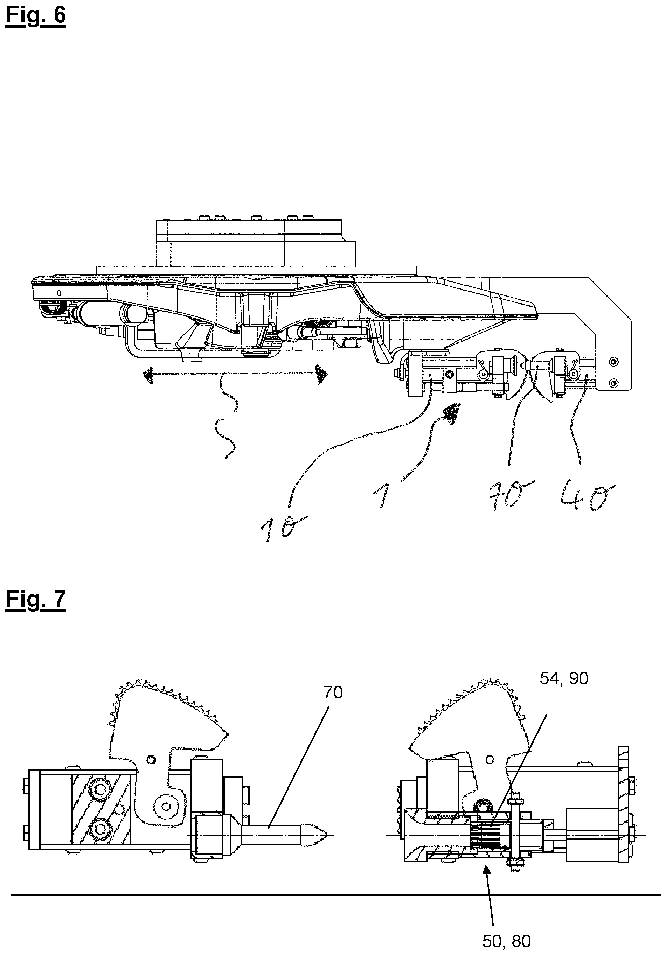

In **Figur 6** ist eine Sattelkupplung gezeigt, welche ein Steckkupplungssystem 1 umfasst. In der Figur 6 ist dabei das Steckkupplungssystem 1 in der Trennstellung befindlich, sodass keine Information und/oder Energie zwischen der Sekundärkopplungsvorrichtung 40 und der Primärkopplungsvorrichtung 10 ausgetauscht werden können.

In **Figur 7** ist eine indirekt wirkende Sperrvorrichtung 50 gezeigt, welche auch eine Sekundärsperrvorrichtung 80 sein kann. In anderen Worten kann die gezeigte Vorrichtung daher auch eine zusätzliche Sperrvorrichtung 50 sein. Die Sperrwirkung der Sekundärsperrvorrichtung 80 / Sperrvorrichtung 50 ist dabei indirekt, denn das eigentliche formschlüssige Sperrmittel 54 ist durch die Aufnahmestruktur 90 in der Form einer Führungsmuffe ausgebildet, welche durch die in Steckrichtung S verlaufenden Schlitze leicht elastisch verformt werden kann. Um die Aufnahmestruktur 90 kann durch einen Aktuator ein Ring geschoben werden, welcher die Aufnahmestruktur 90 umgibt, um so in der Sperrstellung eine Verformung derart zu behindern, dass die in die Aufnahmestruktur 90 aufgenommene Führungsstruktur 70 formschlüssig gegen ein Austreten gesichert ist.

### Bezugszeichenliste:

- 1: - Steckkupplungssystem
- 10: - Primärkopplungsvorrichtung
- 12: - Steckerkonsole
- 14: - Übertragungskontakten
- 40: - Sekundärkopplungsvorrichtung
- 42: - Verbindungskonsole
- 50: - Sperrvorrichtung
- 52: - Aktuator
- 54: - Sperrmittel
- 56: - Sperrstruktur
- 60: - Antrieb
- 70: - Führungsstruktur
- 80: - Sekundärsperrvorrichtung
- 90: - Aufnahmestruktur
- L: - Verlagerungsrichtung
- S: - Steckrichtung

## Patentansprüche

1. Sattelkupplung umfassend ein Steckkupplungssystem (1),
wobei das Steckkupplungssystem (1) eine Primärkopplungsvorrichtung (10) und eine Sekundärkopplungsvorrichtung (40) umfasst,
wobei die Primärkopplungsvorrichtung (10) eine Steckerkonsole (12) mit Übertragungskontakten (14) aufweist,
wobei die Übertragungskontakte (14) insbesondere in eine Steckrichtung (S) weisen,
wobei die Sekundärkopplungsvorrichtung (40) eine Verbindungskonsole (42) aufweist,
wobei das Steckkupplungssystem (1) eine Sperrvorrichtung (50) aufweist, wobei das Steckkupplungssystem (1) derart ausgebildet ist, dass die Steckerkonsole (12) und die Verbindungskonsole (42) in einer Kupplungsstellung miteinander verbunden sind, sodass Informationen und/oder Energie zwischen der Steckerkonsole (12) und der Verbindungskonsole (42) direkt oder indirekt übertragbar sind,
wobei das Steckkupplungssystem (1) derart ausgebildet ist, dass die Steckerkonsole (12) und die Verbindungskonsole (42) in eine Trennstellung überführbar sind, wobei in der Trennstellung keine Informationen und/oder Energie zwischen der Steckerkonsole (12) und der Verbindungskonsole (42) direkt oder indirekt übertragbar sind,
wobei die Sperrvorrichtung (50) derart ausgelegt ist, sodass diese in einer Sperrstellung eine Überführung von der Kupplungsstellung in die Trennstellung formschlüssig verhindert und
in einer Freigabestellung eine Überführung von der Kupplungsstellung in die Trennstellung zulässt,
**dadurch gekennzeichnet, dass** die Steckrichtung (S) parallel zu einer Einfahrrichtung der Sattelkupplungsplatte angeordnet und/oder orientiert ist.

2. Sattelkupplung gemäß Anspruch 1,
wobei die Sperrvorrichtung (50) einen Aktuator (52) aufweist,
wobei der Aktuator (52) die Sperrvorrichtung (50) in die Sperrstellung oder in die Freigabestellung überführen kann.

3. Sattelkupplung gemäß einem der vorhergehenden Ansprüche,
wobei der Aktuator (52) ein Druckluftzylinder, ein magnetischer Antrieb, ein Linearmotor oder ein Hydraulikzylinder ist.

4. Sattelkupplung gemäß einem der vorhergehenden Ansprüche,
wobei die Sperrvorrichtung (50) ein Sperrmittel (54), welches insbesondere ein Sperrstift ist, und/oder eine Sperrstruktur (56) aufweist,
wobei das Sperrmittel (54) und die Sperrstruktur (56) insbesondere komplementär zueinander ausgebildet sind.

5. Sattelkupplung gemäß einem der vorhergehenden Ansprüche,
wobei das Sperrmittel (54) derart gelagert ist, dass dieses durch eine translatorische Bewegung von der Sperrstellung in die Freigabestellung entlang einer Verlagerungsrichtung (L) verlagerbar ist, insbesondere durch den Aktuator (50).

6. Sattelkupplung gemäß einem der vorhergehenden Ansprüche,
wobei die Verlagerungsrichtung (L) quer, insbesondere senkrecht, auf der Steckrichtung (S) steht.

7. Sattelkupplung gemäß einem der vorhergehenden Ansprüche,
wobei die Sperrstruktur (56) eine Nut oder eine Ausnehmung zur Aufnahme des Sperrmittels (54) oder ein Vorsprung ist.

8. Sattelkupplung gemäß einem der vorhergehenden Ansprüche,
wobei die Primärkopplungsvorrichtung (10) und/oder die Sekundärkopplungsvorrichtung (40) eine Führungsstruktur (70) aufweist(en), insbesondere einen Führungsdorn.

9. Sattelkupplung gemäß einem der vorhergehenden Ansprüche,
wobei die Primärkopplungsvorrichtung (10) und/oder die Sekundärkopplungsvorrichtung (40) eine Aufnahmestruktur (90), insbesondere zur Aufnahme oder Führung der Führungsstruktur (70), aufweist,
wobei die Aufnahmestruktur (90) in der Freigabestellung durch elastische Verformung eine Einführung eines Gegenparts, insbesondere einer Führungsstruktur (70), erlaubt,
wobei die Aufnahmestruktur (90) in der Sperrstellung ein Ausführen des Gegenparts, insbesondere formschlüssig, verhindert.

10. Sattelkupplung gemäß einem der vorhergehenden Ansprüche, insbesondere gemäß Anspruch 9,
wobei die Aufnahmestruktur (90) Schlitze, insbesondere in Steckrichtung (S), aufweist.

11. Sattelkupplung gemäß einem der vorhergehenden Ansprüche, insbesondere gemäß Anspruch 9 oder 10,
wobei die Aufnahmestruktur (90) in der Sperrstellung durch einen umgebenden und/oder verschieblichen Ring daran gehindert ist,
durch eine elastische Verformung eine Ein- oder Ausführung eines Gegenparts zu erlauben.

12. Sattelkupplung gemäß einem der vorhergehenden Ansprüche,
wobei eine Sekundärsperrvorrichtung (80) vorhanden ist,
wobei die Sekundärsperrvorrichtung (80) derart ausgelegt ist, sodass diese in dessen Sperrstellung eine Überführung von der Kupplungsstellung in die Trennstellung, insbesondere form- oder kraftschlüssig, verhindert und
in dessen Freigabestellung eine Überführung von der Kupplungsstellung in die Trennstellung zulässt.

13. Sattelkupplung gemäß einem der vorhergehenden Ansprüche, insbesondere gemäß Anspruch 12,
wobei die Sperrvorrichtung (50) und die Sekundärsperrvorrichtung (80) auf unterschiedlichen Sperrmechanismen basieren.

14. Sattelkupplung gemäß einem der vorhergehenden Ansprüche,
wobei die Primärkopplungsvorrichtung (10) und/oder die Sekundärkopplungsvorrichtung (40) einen Antrieb (60) aufweist(en),
wobei der Antrieb (60) derart ausgebildet ist, die Primärkopplungsvorrichtung (10) und/oder die Sekundärkopplungsvorrichtung (40), insbesondere durch eine translatorische Bewegung in Steckrichtung (S), von der Kupplungsstellung in die Trennstellung und/oder von der Trennstellung in die Kupplungsstellung zu überführen.

## Claims

1. Fifth wheel coupling comprising a plug-in coupling system (1),
wherein the plug-in coupling system (1) comprises a primary coupling device (10) and a secondary coupling device (40),
wherein the primary coupling device (10) has a plug console (12) with transmission contacts (14),
wherein the transmission contacts (14) point in particular in a plug-in direction (S),
wherein the secondary coupling device (40) comprises a connection bracket (42),
wherein the plug-in coupling system (1) has a locking device (50),
wherein the plug-in coupling system (1) is designed in such a way that the plug console (12) and the connection console (42) are connected to one another in a coupling position, so that information and/or energy can be transmitted directly or indirectly between the plug console (12) and the connection console (42),
wherein the plug-in coupling system (1) is designed in such a way that the plug console (12) and the connection console (42) can be transferred into a disconnected position, wherein in the disconnected position no information and/or energy can be transmitted directly or indirectly between the plug console (12) and the connection console (42),
wherein the locking device (50) is designed such that, in a locking position, it positively prevents a transfer from the coupling position to the disconnected position, and
allows a transfer from the coupling position to the disconnected position in a release position,
**characterized in that** the plug-in direction (S) is arranged and/or oriented parallel to a retraction direction of the fifth wheel coupling plate.

2. Fifth wheel coupling according to claim 1,
wherein the locking device (50) has an actuator (52),
wherein the actuator (52) can move the locking device (50) into the locking position or into the release position.

3. Fifth wheel coupling according to one of the preceding claims,
wherein the actuator (52) is a compressed air cylinder, a magnetic drive, a linear motor or a hydraulic cylinder.

4. Fifth wheel coupling according to one of the preceding claims,
wherein the locking device (50) has a locking means (54), which is in particular a locking pin, and/or a locking structure (56),
wherein the locking means (54) and the locking structure (56) are in particular complementary to one another.

5. Fifth wheel coupling according to one of the preceding claims,
wherein the locking means (54) is mounted in such a way that it can be displaced by a translatory movement from the locking position into the release position along a displacement direction (L), in particular by the actuator (50).

6. Fifth wheel coupling according to one of the preceding claims,
wherein the displacement direction (L) is transverse, in particular perpendicular, to the plug-in direction (S).

7. Fifth wheel coupling according to one of the preceding claims,
wherein the locking structure (56) is a groove or a recess for receiving the locking means (54) or a projection.

8. Fifth wheel coupling according to one of the preceding claims,
wherein the primary coupling device (10) and/or the secondary coupling device (40) has/have a guide structure (70), in particular a guide mandrel.

9. Fifth wheel coupling according to one of the preceding claims,
wherein the primary coupling device (10) and/or the secondary coupling device (40) has a receiving structure (90), in particular for receiving or guiding the guide structure (70),
wherein the receiving structure (90) in the release position permits insertion of a counterpart, in particular a guide structure (70), by elastic deformation,
wherein the receiving structure (90) prevents the counterpart from being carried out in the locking position, in particular in a form-fitting manner.

10. Fifth wheel coupling according to one of the preceding claims, in particular according to claim 9,
wherein the receiving structure (90) has slots, in particular in the plug-in direction (S).

11. Fifth wheel coupling according to one of the preceding claims, in particular according to claim 9 or 10,
wherein the receiving structure (90) is prevented in the locking position by a surrounding and/or displaceable ring,
to allow the insertion or removal of a counterpart through elastic deformation.

12. Fifth wheel coupling according to one of the preceding claims,
wherein a secondary locking device (80) is provided,
wherein the secondary locking device (80) is designed such that, in its locking position, it prevents a transfer from the coupling position to the disconnected position, in particular positively or non-positively, and
in its release position allows a transfer from the coupling position to the disconnected position.

13. Fifth wheel coupling according to one of the preceding claims, in particular according to claim 12,
wherein the locking device (50) and the secondary locking device (80) are based on different locking mechanisms.

14. Fifth wheel coupling according to one of the preceding claims,
wherein the primary coupling device (10) and/or the secondary coupling device (40) comprise(s) a drive (60),
wherein the drive (60) is designed to transfer the primary coupling device (10) and/or the secondary coupling device (40) from the coupling position to the disconnected position and/or from the disconnected position to the coupling position, in particular by means of a translatory movement in the plug-in direction (S).

## Revendications

1. Sellette d'attelage comprenant un système d'attelage par enfichage (1), dans laquelle
le système d'attelage par enfichage (1) comprend un dispositif de couplage primaire (10) et un dispositif de couplage secondaire (40),
le dispositif de couplage primaire (10) comprend une console de fiche (12) ayant des contacts de transmission (14),
les contacts de transmission (14) sont orientés en particulier dans une direction d'enfichage (S),
le dispositif de couplage secondaire (40) comprend une console de liaison (42),
le système d'attelage par enfichage (1) comprend un dispositif de blocage (50),
le système d'attelage par enfichage (1) est conçu de telle sorte que la console de fiche (12) et la console de liaison (42) sont reliées entre elles dans une position de couplage, de sorte que des informations et/ou de l'énergie peuvent être transmises directement ou indirectement entre la console de fiche (12) et la console de liaison (42),
le système d'attelage par enfichage (1) est conçu de telle sorte que la console de fiche (12) et la console de liaison (42) peuvent être transférées vers une position de séparation, aucune information et/ou énergie ne pouvant être transmise directement ou indirectement entre la console de fiche (12) et la console de liaison (42) dans la position de séparation,
le dispositif de blocage (50) est conçu de telle sorte que, dans une position de blocage, il empêche par complémentarité de forme un transfert de la position de couplage à la position de séparation et, dans une position de déblocage, il autorise un transfert de la position de couplage à la position de séparation,
**caractérisée en ce que** la direction d'enfichage (S) est disposée et/ou orientée parallèlement à une direction d'insertion du plateau de sellette d'attelage.

2. Sellette d'attelage selon la revendication 1,
dans laquelle le dispositif de blocage (50) comprend un actionneur (52), l'actionneur (52) est apte à transférer le dispositif de blocage (50) vers la position de blocage ou vers la position de déblocage.

3. Sellette d'attelage selon l'une des revendications précédentes,
dans laquelle l'actionneur (52) est un vérin pneumatique, un entraînement magnétique, un moteur linéaire ou un vérin hydraulique.

4. Sellette d'attelage selon l'une des revendications précédentes,
dans laquelle le dispositif de blocage (50) comprend un moyen de blocage (54) qui est en particulier une goupille de blocage, et/ou une structure de blocage (56),
le moyen de blocage (54) et la structure de blocage (56) sont en particulier complémentaires l'un de l'autre.

5. Sellette d'attelage selon l'une des revendications précédentes,
dans laquelle le moyen de blocage (54) est monté de manière à pouvoir être déplacé par un mouvement de translation de la position de blocage à la position de déblocage le long d'une direction de déplacement (L), en particulier par l'intermédiaire de l'actionneur (50).

6. Sellette d'attelage selon l'une des revendications précédentes,
dans laquelle la direction de déplacement (L) est transversale, en particulier perpendiculaire, à la direction d'enfichage (S).

7. Sellette d'attelage selon l'une des revendications précédentes,
dans laquelle la structure de blocage (56) est une rainure ou un évidement, destiné(e) à recevoir le moyen de blocage (54), ou une saillie.

8. Sellette d'attelage selon l'une des revendications précédentes,
dans laquelle le dispositif de couplage primaire (10) et/ou le dispositif de couplage secondaire (40) comporte(nt) une structure de guidage (70), en particulier un mandrin de guidage.

9. Sellette d'attelage selon l'une des revendications précédentes,
dans laquelle le dispositif de couplage primaire (10) et/ou le dispositif de couplage secondaire (40) comporte(nt) une structure de réception (90) destinée en particulier à recevoir ou à guider la structure de guidage (70),
la structure de réception (90) permet, en position de déblocage, par déformation élastique, une insertion d'une contrepartie, en particulier d'une structure de guidage (70),
la structure de réception (90) empêche, en position de blocage, une extraction de la contrepartie, en particulier par complémentarité de forme.

10. Sellette d'attelage selon l'une des revendications précédentes, en particulier selon la revendication 9,
dans laquelle la structure de réception (90) présente des fentes, en particulier dans la direction d'enfichage (S).

11. Sellette d'attelage selon l'une des revendications précédentes, en particulier selon la revendication 9 ou 10,
dans laquelle, en position de blocage, la structure de réception (90) est empêchée, par une bague qui l'entoure et/ou qui peut coulisser, de permettre l'insertion ou l'extraction d'une contrepartie par déformation élastique.

12. Sellette d'attelage selon l'une des revendications précédentes,
dans laquelle il existe un dispositif de blocage secondaire (80),
le dispositif de blocage secondaire (80) est conçu de telle sorte que, dans sa position de blocage, il empêche un transfert de la position de couplage à la position de séparation, en particulier par complémentarité de forme ou de force, et que, dans sa position de déblocage, il autorise un transfert de la position de couplage à la position de séparation.

13. Sellette d'attelage selon l'une des revendications précédentes, en particulier selon la revendication 12,
dans laquelle le dispositif de blocage (50) et le dispositif de blocage secondaire (80) sont basés sur des mécanismes de blocage différents.

14. Sellette d'attelage selon l'une des revendications précédentes,
dans laquelle le dispositif de couplage primaire (10) et/ou le dispositif de couplage secondaire (40) comporte(nt) un entraînement (60),
l'entraînement (60) est conçu pour transférer le dispositif de couplage primaire (10) et/ou le dispositif de couplage secondaire (40) de la position de couplage à la position de séparation et/ou de la position de séparation à la position de couplage, en particulier par un mouvement de translation dans la direction d'enfichage (S).
